# EUROPÄISCHE PATENTSCHRIFT

(11) **EP 3 504 255 B1**
(45) Veröffentlichungstag und Bekanntmachung des Hinweises auf die Patenterteilung: **11.11.2020**
(21) Anmeldenummer: 17765070.2
(22) Anmeldetag: 25.08.2017
(51) Int. Cl.: C08G 18/54, B33Y 10/00, B29C 64/165, B22C 1/22, B29C 64/112, B33Y 70/00

(54) **VERFAHREN ZUM SCHICHTWEISEN AUFBAU VON FORMKÖRPERN MIT EINEM NOVOLAK-POLYURETHAN BASIERTEM BINDERSYSTEM**
PROCESS FOR LAYERWISE CONSTRUCTION OF SHAPED BODIES WITH A NOVOLAC-POLYURETHANE-BASED BINDER SYSTEM
PROCÉDÉ DE FORMATIONS PAR COUCHES DE CORPS MOULÉS AVEC UN SYSTÈME DE LIANT À BASE DE POLYURÉTHANE NOVOLAQUE

(30) Priorität: 26.08.2016 DE 102016115947
(43) Veröffentlichungstag der Anmeldung: 03.07.2019
(73) Patentinhaber: ASK Chemicals GmbH, 40721 Hilden (DE)
(72) Erfinder: BARTELS, Dennis, 46284 Dorsten (DE); GIENIEC, Antoni, 40724 Hilden (DE); HURKES, Natascha, 41189 Mönchengladbach (DE); KAMINSKI, Arkadius, 40822 Mettmann (DE)
(74) Vertreter: Müller Schupfner & Partner Patent- und Rechtsanwaltspartnerschaft mbB
(86) Internationale Anmeldenummer: PCT/DE2017/100719
(87) Internationale Veröffentlichungsnummer: WO 2018/036593

(56) Entgegenhaltungen:
- DE-A1-102011 053 205
- DE-A1-102012 020 000
- US-A- 3 702 316

## Beschreibung

Die Erfindung betrifft ein Verfahren zum schichtweisen Aufbau von Körpern umfassend zumindest einen Novolak in fester rieselfähiger Form, eine Isocyanat-Komponente und ein erstes Lösungsmittel als flüssige zu druckende Komponente, wobei das erste Lösungsmittel nach einer bevorzugten Ausführungsform der Erfindung weiterhin einen Katalysator gelöst im ersten Lösungsmittel aufweist, eine entsprechende Baustoffmischung, ein Komponentensystem zur Herstellung der Körper mittels 3-D-Druck und nach diesem Verfahren hergestellte dreidimensionale Körper in Form von Formen und Kernen für den Metallguss.

Unter der Bezeichnung Rapid Prototyping oder 3-D Druck sind verschiedene Methoden zum schichtweisen Aufbau dreidimensionaler Formkörper bekannt. Mit Hilfe dieses Verfahrens lassen sich Körper mit selbst kompliziertesten Geometrien ohne Formwerkzeuge direkt aus den CAD-Daten herstellen. Dies ist mit konventionellen Methoden nicht möglich.

Nach der EP 0882568 B1 wird zur Herstellung des dreidimensionalen Körpers ein loser Formgrundstoff, bevorzugt in Form eines Croning Sandes, zunächst per Drucktechnik schichtweise selektiv mit einem sogenannten Modifizierungsmittel versehen. Bei diesen Modifizierungsmitteln handelt es sich z.B. um einen Alkohol oder eine Säure, die bei dem nachfolgenden Verfestigungsschritt die Aufgabe haben die thermische Aushärtung entweder zu hemmen oder zu beschleunigen. Bei der Verwendung eines Reaktionshemmers härtet die Formgrundstoff/Bindermischung unter Bildung des gewünschten Formteils beim Erwärmen an den Stellen aus, die nicht mit dem Modifizierungsmittel behandelt wurden. Bei der Verwendung eines Reaktionsbeschleunigers dagegen reagieren das Bindemittel und der latente Härter an den mit dem Modifizierungsmittel versehenen Stellen miteinander und verbinden dort die bis dahin losen Partikel zum fertigen Bauteil. Dieses kann anschließend wie üblich vom losen, nicht ausgehärteten Formstoff/Bindergemisch befreit werden. Üblicherweise wird den in der EP 0882568 B1 beschriebenen Novolak umhüllten Croning Sanden ca. 10-15% Hexamethylentetramin bezogen auf die Sandmenge als Teil der Baustoffmischung zugesetzt. Dieses wird unter Wärmeeinwirkung während der Verarbeitung zu Ammoniak und Formaldehyd aufgespalten und leitet somit den Aushärtungsprozess ein. Eine Isocyanat-Komponente ist nicht Teil der Zusammensetzung.

EP 1324842 B1 offenbart ein Verfahren, bei dem der lose Formgrundstoff, aus dem der dreidimensionale Körper aufgebaut werden soll, schichtweise selektiv mit einem Bindemittel versehen wird. Der Bindemittelauftrag erfolgt dabei analog der Arbeitsweise eines Tintenstrahldruckers mittels eines dünnen Strahls oder eines Bündels dünner Strahlen. Die Aushärtung erfolgt erst dann, wenn alle für die Herstellung des dreidimensionalen Körpers notwendigen Schichten fertig gestellt sind. Die Härtungsreaktion wird beispielsweise durch Fluten des gesamten Bauteils mit einem Härter, vorzugsweise einem Gas, ausgelöst.

In WO 01/68336 A2 wird der Binder, z.B. ein Furanharz, ein Phenolharz oder ein Resol-Ester, schichtweise nicht selektiv, sondern über die gesamte Arbeitsfläche des losen Formstoffes aufgesprüht und danach ebenfalls schichtweise durch nun selektives Aufbringen eines Härters, wie einer organischen Säure, ausgehärtet. Die EP 1268165 B1 variiert dieses Verfahren, indem sowohl flüssiger Binder als auch flüssiger Härter nacheinander selektiv und schichtweise auf die auszuhärtenden Teilbereiche aufgebracht werden.

Dieses Verfahren wurde in der EP 1509382 B1 weiterentwickelt. Der Binder wird nicht mehr schichtweise aufgedruckt, sondern direkt mit dem Formgrundstoff vermischt. Diese Formstoff-Bindermischung wird dann durch den selektiven Auftrag des Härters ausgehärtet.

In EP 1638758 B1 wird die Reihenfolge der Zugabe umgekehrt. Zuerst wird der Formstoff mit einem Aktivator (Härter) vorgemischt und danach der Binder schichtweise selektiv aufgetragen. Als Härter werden u.a. Säuren, z.B. wässrige p-Toluolsulfonsäure, und als Binder Phenolharze, Polyisocyanate, Polyurethane, Epoxidharze, Furanharze, Polyurethan Polymere, Phenol Polyurethane, Phenol- Formaldehyd Furfuryl Alkohole, Urea-Formaldehyd Furfuryl Alkohole, Formaldehyd Furfuryl Alkohole, Peroxide, Polyphenolharze, Resolester, Silikate (z.B. Natriumsilikat), Salz, Gips, Bentonit, wasserlösliche Polymere, organische Säuren, Kohlenhydrate oder Proteine erwähnt.

In der DE 102014106178 A1 wird ein Verfahren beschrieben in dem ein Formstoff mittels eines alkalischen Phenolharzes, eines Esters und wahlweise eines anorganischen Additivs schichtweise ausgehärtet wird.

In der DE 102012020000 A1 (US 20150273572 A1) wird ein Verfahren beschrieben, in dem eine Baustoffmischung in Form eines Croningsandes schichtweise ausgebracht und mittels eines über einen Druckkopf selektiv ausgebrachten Lösungsmittels gehärtet wird. Es wird eine Vielzahl von Bindern offenbart, u.a. auch Novolake. Es wird aber nicht offenbart, einen Novolak mittels Lösungsmittel auf- bzw. anzulösen und dann mit einem in den Baustoff eingebrachten Isocyanat zur Reaktion zu bringen. Weiterhin werden Thermoplaste als Schmelzklebstoffe genannt. Die vorliegende Erfindung betrifft jedoch ausschließlich Binder die Duroplaste bilden.

Insbesondere das System Säure/Furanharz entsprechend EP 1638758 B1 und das System Ester/alkalisches Phenolharz entsprechend DE 102014106178 A1 haben in der Praxis eine weite Verbreitung gefunden und werden bei der Entwicklung neuer Gussteile sowie bei der Herstellung von Einzelteilen oder kleinen Serien eingesetzt, bei denen die konventionelle Fertigung mit Formwerkzeugen zu aufwendig und teuer bzw. nur mit einem komplizierten Kernpaket darstellbar wäre.

Trotz vieler Vorteile der bereits in das Rapid Prototyping implementierten Bindersysteme, wie z.B. Geschwindigkeit bei der Herstellung, hoher Formstabilität und guter Lagerstabilität der Gießformen etc. besteht noch Bedarf für Verbesserungen. Nachteile der bestehenden Bindersysteme aus DE 102014106178 A1 und EP 1638758 B1 sind vor allem die Anforderung an viskositätsstabile zu verdruckenden Komponenten und die zum Teil hohen Wasseranteile in der Formstoffmischung, die entweder aus dem Bindemittel, der Säure und/oder aus dem Aushärtungsprozess (Kondensationsreaktion) resultieren. Beim Verdrucken nicht viskositätsstabiler Bindersysteme kann es zur Austrocknung und Verstopfung des Druckkopfes kommen. Dies geht mit zum Teil langen Stillstandzeiten und/oder hohen Kosten für die Reinigung oder den Ersatz des Druckkopfes einher. Hohe Wasseranteile können sich nachteilig auf die Durchhärtung des Formkörpers sowie auf das spätere Verhalten (z.B. Gasbildung) während des Gussprozesses auswirken.

Ein Pendant für das ColdBox Verfahren, bei dem ein Polyol z.B. in Form eines Phenolharzes mit Isocyanaten durch Begasung mit flüchtigen tertiären Amin-Katalysatoren ausgehärtet wird, ist für das Rapid Prototyping bislang nicht bekannt. Dies liegt vor allem an der schlechten Verdruckbarkeit der einzelnen Komponenten.

Die zum Teil zu hohe Viskosität des Polyols, der hohe technische Aufwand für gashärtende Systeme und die Reaktion des Isocyanates mit Luftfeuchtigkeit während des Verdüsens, die zur Verstopfung des Druckkopfes führen kann, sind von Nachteil. Aufgrund der limitierten Verdruckbarkeit von Polyol- und Isocyanat-Komponente ist ein entsprechendes NoBake- oder genauer PEP SET Verfahren, bei dem statt einem gasförmigen Katalysator ein flüssiger eingesetzt wird, bislang ebenfalls nicht in der Praxis einsetzbar.

### Aufgabe der Erfindung

Aufgabestellung der vorliegenden Erfindung ist es, ein Baustoff bzw. Formstoff / Bindemittel / Härter-System zur Verfügung zu stellen, welches die Herstellung von 3D-Körpern und insbesondere Gießformen und Kerne nach dem Rapid-Prototyping-Verfahren ermöglicht und das die beschriebenen Nachteile nicht aufweist und im Weiteren durch folgende Eigenschaften gekennzeichnet ist:
a) über sehr lange Zeiträume stabile für den Druckvorgang einzusetzende Rohstoffe,
b) einen niedrigen Wasseranteil in der Baustoffmischung,
c) geringe apparative Anforderungen,
d) eine geringe Schadstoffemission, insbesondere verglichen mit einem Verfahren basierend auf Croning Sanden,
e) chemische und gießtechnische Vergleichbarkeit zu Formen und Kernen die nach dem NoBake (PEP SET) Verfahren basierend auf Polyurethanbindemitteln hergestellt wurden.

### Zusammenfassung der Erfindung

Diese und andere Aufgaben werden durch den Gegenstand der unabhängigen Patentansprüche gelöst, vorteilhafte Weiterbildungen sind Gegenstand der abhängigen Patentansprüche oder werden nachstehend beschrieben.

Das Verfahren zum schichtweisen Aufbau von Körpern umfasst zumindest die folgenden Schritte:
a) Bereitstellen einer Baustoffmischung umfassend zumindest einen Novolak als Feststoff,
   und eine Isocyanat-Komponente umfassend ein Polyisocyanat;
b) Ausbreiten einer Schicht der Baustoffmischung mit einer Schichtdicke von 0,05 mm bis 3 mm, bevorzugt 0,1 mm bis 2 mm und besonders bevorzugt 0,1 mm bis 1 mm (ggf. auch in mehreren Arbeitsschritten);
c) Bedrucken ausgewählter Bereiche der Schicht mit einem ersten Lösungsmittel, wobei das erste Lösungsmittel insbesondere
   frei von einer Isocyanat-Verbindung ist und
   auch unabhängig hiervon frei von einer Polyol-Verbindung (wie ein Novolak) ist; und
d) mehrfaches Wiederholen der Schritte b) und c).

Das erste Lösungsmittel ist so ausgewählt, dass das erste Lösungsmittel den Novolak in Schritt c) zumindest teilweise löst, um dadurch die Umsetzung des Novolaks mit dem Polyisocyanat zu ermöglichen, insbesondere die schichtweise Umsetzung.

Ohne an die Theorie gebunden sein zu wollen, wird angenommen, dass das Lösen des Novolaks so erfolgt, dass i) zunächst Lösungsmittel in oberflächennahe Schichten des Novolak-Partikels infiltriert, ii) diese Schichten quellen / anschwellen, iii) gelartig werden, bevor sich die iv) Polymermoleküle schließlich in Lösung begeben. Es wird davon ausgegangen, dass bereits ab iii) das Polyisocyanat mit dem Novolak reagiert.

Vorzugsweise löst sich der Novolak zu größer 3 Gew.%, vorzugsweise zu größer 10 Gew.%, besonders bevorzugt zu größer 30 Gew.% und insbesondere bevorzugt größer 50 Gew.% in dem ersten Lösungsmittel, bezogen auf das Gewicht an gelöstem zu eingesetztem Novolak als rieselfähigem partikulären Feststoff.

Die Löslichkeit des Novolaks bei der gewünschten Temperatur, d.h. der Arbeitstemperatur des Verfahrensschrittes c), wird dabei so bestimmt, dass 1000 g erstes Lösungsmittel und 20 g Novolak als rieselfähiger partikulärer Feststoffs bei der gewünschten Temperatur zusammengebracht werden, für 2 h bei konstanter Temperatur gerührt werden und Flüssigkeit und Feststoff getrennt werden. Die Fest-Flüssig-Trennung kann z.B. durch Sedimentation und/oder Filtration erfolgen. Der Gewichtsanteil des gelösten Novolaks relativ zum insgesamt eingesetzten Novolak ist dann die Löslichkeit des Novolaks.

Das Verfahren kann weiterhin umfassen die folgenden Schritte:
i) Härtung des Körpers nach Beendigung des schichtweisen Aufbaus in einem Ofen oder mittels Mikrowelle und nachfolgendes
ii) Entfernen der ungebundenen Baustoffmischung von der zumindest teilgehärteten Gießform.

Das Bedrucken erfolgt mit einem eine Vielzahl von Düsen aufweisenden Druckkopf, wobei die Düsen vorzugsweise einzeln selektiv ansteuerbar sind, wobei der Drucckopf insbesondere ein Drop-on-Demand Druckkopf mit Bubble-Jet oder Piezo-Technik ist. Der Druckkopf wird zumindest in einer Ebene von einem Computer gesteuert bewegt um das erste Lösungsmittel schichtweise aufzutragen.

Das Komponentensystem zur Herstellung einer Baustoffmischung umfasst separat voneinander zumindest folgende Komponenten:
Komponente (A) einen Novolak in Form eines rieselfähigen partikulären Feststoffs,
Komponente (B) eine Isocyanat-Komponete umfassend ein zweites Lösungsmittel und zumindest ein Polyisocyanat mit zumindest zwei Isocyanatgruppen gelöst in dem zweiten Lösungsmittel;
Komponente (C) ein erstes Lösungsmittel, worin das tertiäre Amin löslich ist und das das pulverförmigen Novolak zumindest teilweise löst,
wobei das erste Lösungsmittel ungleich dem zweiten Lösungsmittel ist und die aufgeführten Inhaltsstoffe der Komponenten jeweils nur in einer der Komponenten enthalten sind.

Darüber hinaus ist eine rieselfähige Baustoffmischung Teil der Erfindung umfassend:
- einen Novolak in Form eines rieselfähigen partikulären Feststoffs,
- eine Isocyanat-Komponente, umfassend zumindest ein Polyisocyanat mit zumindest zwei Isocyanatgruppen und
- einen partikulären Formgrundstoff, vorzugsweise einen feuerfesten Formgrundstoff,
wobei geträgerter Novolak, wie ein Croningsand, und der partikuläre Formgrundstoff eine Komponente bilden können.

### Detaillierte Beschreibung der Erfindung

### (1) Baustoffmischung bzw. Formstoff

Die Baustoffmischung umfasst sämtliches Material, dass schichtweise ausgebracht wird und nicht über den Druckkopf selektiv zugeführt wird und obligatorisch Novolak und Isocyanat-Komponente, bevorzugt auch den Formgrundstoff. Handelt es sich bei dem Formgrundstoff um einen feuerfesten Formgrundstoff wird statt des Begriffes Baustoffmischung auch der Begriff Formstoff verwendet. Nicht Teil der Baustoffmischung oder des Formstoffs ist das erste Lösungsmittel und soweit das erste Lösungsmittel einen Katalysator enthält, der Katalysator.

### (2) Formgrundstoff

Als Formgrundstoffe sind alle partikulären Feststoffe einsetzbar, die sich in Gegenwart des/der verwendeten Lösungsmittel(s) nicht lösen. Der Formgrundstoff weist einen rieselfähigen Zustand auf.

Als feuerfester Formgrundstoff können für die Herstellung von Gießformen übliche und bekannte Materialien verwendet werden. Geeignet sind beispielsweise Quarz-, Zirkon- oder Chromerzsand, Olivin, Vermiculit, Bauxit, Schamotte sowie künstlich hergestellte bzw. aus synthetischen Materialien erhältliche Formgrundstoffe (z.B. Mikrohohlkugeln). Unter einem feuerfesten Formgrundstoff werden Stoffe verstanden, die einen hohen Schmelzpunkt (Schmelztemperatur) aufweisen. Vorzugsweise ist der Schmelzpunkt des feuerfesten Formgrundstoffs größer als 600°C, bevorzugt größer als 900°C, besonders bevorzugt größer als 1200°C und insbesondere bevorzugt größer als 1500°C.

Der Formgrundstoff macht vorzugsweise größer 80 Gew.%, insbesondere größer 90 Gew.%, besonders bevorzugt größer 95 Gew.%, der Formstoff- bzw. Baustoffmischung aus.

Der mittlere Durchmesser der Formgrundstoffe, insbesondere der feuerfesten Formgrundstoffe, liegt in der Regel zwischen 30 µm und 700 µm, bevorzugt zwischen 40 µm und 550 µm und besonders bevorzugt zwischen 50 µm und 500 µm. Die Partikelgröße lässt sich z.B. durch Siebung nach DIN ISO 3310 bestimmen.

### (3) Bindemittel

Das Bindemittel ist ein Polyurethan erhältlich aus der Umsetzung zumindest einer Polyol-Komponente und einer Isocyanat-Komponente.

### (4) Novolak

Bei der Polyol-Komponente handelt es sich um einen Novolak der als Feststoff vorliegt und zwar in rieselfähiger partikulärer Form. Novolake sind schmelzbare und lagerstabile methylenverbrückte Kettenpolymere, die durch Polykondensation eines Aldehyds mit einem Überschuss einer Phenol-Verbindung in Gegenwart katalytischer Mengen einer Säure oder eines Metallsalzes erhältlich sind (Katalysator für die Herstellung der Novolake). Das Aldehyd-zu-Phenol Mol-Vverhältnis ist insbesondere kleiner als Eins.

Im Allgemeinen beträgt das Verhältnis Aldehyd zu Phenol-Verbindung bei Novolaken nicht weniger als 0,3:1 bis kleiner 1 : 1 bevorzugt 0,4 : 1 bis 0,9:1 und besonders bevorzugt 0,6 :1 bis 0,9:1.

Geeignete Phenol-Verbindungen sind durch einen oder mehrere aromatische Ringe und eine Hydroxy-Substitution an diesen gekennzeichnet. Beispiele sind neben Phenol selbst, substituierte Phenole, wie z.B. Kresole oder Nonylphenol, 1,2-Dihydroxybenzol (Brenzcatechin), 1,3-Dihydroxybenzol (Resorcin), Cashewnussschalenöl, d.h. eine Mischung aus Cardanol und Cardol, oder 1,4-Dihydroxybenzol (Hydrochinon) oder phenolische Verbindungen wie z.B. Bisphenol A oder Mischungen daraus. Besonders bevorzugt ist Phenol als phenolische Komponente.

Als Aldehyde sind geeignet zum Beispiel Formaldehyd z.B. in Form wässriger Lösungen oder polymer in Form von Paraformaldehyd, Butyraldehyd, Glyoxal und deren Mischungen. Besonders bevorzugt ist Formaldehyd oder Mischungen enthaltend überwiegend (bezogen auf molare Menge der Aldehyde) Formaldehyd.

Als Katalysatoren für die Herstellung der Novolake werden starke Mineralsäuren wie Schwefelsäure, Salzsäure, oder Phosphorsäure, organische Säuren wie Sulfonsäuren, Oxalsäure oder Salicylsäure oder Anhydride wie zum Beispiel Maleinsäureanhydrid verwendet.

Andererseits sind Metallsalze zum Beispiel Zn(II)-, Mg(II)-, Cd(II)- Pb(II)-, Cu(II)- oder Ni(II)-Salze als Katalysatoren geeignet. Bevorzugt sind Acetate und besonders bevorzugt ist Zinkacetat.

Im Sinne der vorliegenden Erfindung werden die Novolake in bei Raumtemperatur (25°C) fester und rieselfähiger Form eingesetzt, da diese sich homogen in die Baustoffmischung einbringen lassen.

Der mittlere Durchmesser der Novolak-Partikel beträgt vorzugsweise zwischen 0,1 µm und 700 µm, bevorzugt zwischen 0,5 µm und 550 µm und besonders bevorzugt zwischen 1 µm und 300 µm. Der mittlere Partikel-Durchmesser kann z.B. durch Laserbeugung in Wasser mit einem Laser-Streulichtspektrometer Horiba LA-960 der Firma Retsch auf Grundlage der statischen Laserlichtstreuung (gemäß DIN/ISO 13320) und unter Verwendung des Fraunhofer Modells bestimmt werden.

Die Kornform der Novolak-Partikel kann im Grunde jegliche Form aufweisen wie beispielsweise faserförmig, splittrig, kantenförmig, plättchenförmig, kantengerundet oder auch rund. Bevorzugt werden allerdings kantengerundete und runde Partikelformen. Besonders bevorzugt werden spheroide Partikelformen eingesetzt, wobei diese ellipsoid oder kugelförmig sein können - kugelförmige werden hierbei bevorzugt. Das Verhältnis größter Längenausdehnung zu kleinster Längenausdehnung der jeweiligen Partikelformen (für alle Raumrichtungen) ist bevorzugt kleiner als 10:1, besonders bevorzugt kleiner 5:1 und insbesondere bevorzugt kleiner als 3:1. Da kugelförmige Partikelformen in besonderem Maße vorteilhaft sind, ist ein Verhältnis größter Längenausdehnung zu kleinster Längenausdehnung von 1,1:1 bis 1:1 ideal.

Nach einer bevorzugten Ausgestaltung ist der mittlere Durchmesser der Novolak-Partikel kleiner oder gleich dem mittleren Durchmesser des eingesetzten Formgrundstoffes.

Des Weiteren ist es möglich den Formgrundstoff mit dem Novolak zu umhüllen und den Novolak in geträgerter Form einzusetzen. Dies erfolgt z.B. durch Erhitzen einer Mischung aus Novolak und Formgrundstoff oberhalb des Schmelzpunktes des Novolakes.

Dadurch wird der Novolak aufgeschmolzen und der Formgrundstoff wird mit Novolak umhüllt. Dieser mit Novolak versehene Formgrundstoff (geträgerter Novolak) ist ebenso für sich genommen als auch in Kombination mit einer losen Mischung aus Formgrundstoff und partikulärem Novolak einsetzbar.

Möglich ist außerdem der Einsatz von mit Novolak geträgerten Formgrundstoffen in Form eines Croning Sandes, bei denen der Katalysator in Form von Hexamethylentetramin in im Gegensatz zu den üblichen Zugabemengen reduzierter Menge von größer 0 Gew.% bis ca. 10 Gew.%, bevorzugt von ca. 0,05 Gew.% bis ca. 8 Gew.%, besonders bevorzugt von ca. 0,1 Gew.% bis ca. 5 Gew.% und insbesondere bevorzugt von ca. 0,15 Gew.% bis ca. 3 Gew.% bezogen auf den Novolak vorliegt.

Bevorzugt ist der Formgrundstoff in Abwesenheit von Hexamethylentetramin zumindest teilweise mit dem Novolak umhüllt.

Bevorzugte einzusetzende Novolake zeichnen sich durch eine Fließstrecke von 8-130 mm (DIN 8619, Zusatz von 10% Hexamethylentetramin), bevorzugt durch eine Fließstrecke von 10-80 mm und besonders bevorzugt durch eine Fließstrecke von 15-50 mm aus. Durch die Fließstrecke wird die Reaktivität der Novolake charakterisiert (auch in Bezug auf die Polyurethanreaktion). Kurze Fließstrecken kennzeichnen eine hohe Reaktivität und damit eine schnelle Aushärtung innerhalb des offenbarten Verfahrens aus. Die Umsetzung mit Hexamethylentetramin ist ein relatives Maß für die Reaktivität in Bezug auf die Umsetzung mit den Isocyanatgruppen der Polyisocyanate.

Ebenso weisen die Novolake vorzugsweise einen Schmelzpunkt von 40 bis 150°C, bevorzugt von 50 bis 140°C, besonders bevorzugt von 55 bis 130°C und insbesondere bevorzugt von 60 bis 120°C auf.

Üblicherweise werden für die Herstellung von Gießformen die Novolake in einer Konzentration von 0,3 bis 20 Gew.%, bevorzugt von 0,4 bis 10 Gew.% und besonders bevorzugt von 0,5 bis 5 Gew.% eingesetzt, jeweils bezogen auf den Baugrundstoff.

Wenn kein Baugrundstoff vorhanden ist, werden Novolake in einer Konzentration von 10 bis 90 Gew.%, bevorzugt von 20 bis 80 Gew.% und besonders bevorzugt von 30 bis 70 Gew.% eingesetzt, bezogen auf die Baustoffmischung.

### (5) Erstes Lösungsmittel

Als erstes Lösungsmittel werden solche Lösungsmittel eingesetzt, die den Novolak ganz oder teilweise lösen und somit nach dem schichtweisen Aufbringen die selektive Aushärtung ermöglichen. Die Auflösung bzw. das Anlösen des Novolakes kann bei Raumtemperatur oder bei erhöhten Temperaturen erfolgen, z.B. bei üblichen Arbeitstemperaturen für Schritt c) von 10 bis 40°C, insbesondere 20 bis 30°C. Geeignete Lösungsmittel sind organische Lösungsmittel umfassend 1 bis 25 Kohlenstoffatome und gebundenen Sauerstoff in Form einer Alkohol-, Keto-, Aldehyd- oder Ester-Gruppe und Mischungen daraus, insbesondere aprotische organische Lösungsmittel aufweisend Keto-, Aldehyd, und/oder Ester-Gruppen. Aprotische organische Lösungsmittel sind bevorzugt. Protische Lösungsmittel wie Alkohole reagieren mit dem Polyisocyanat unter Ausbildung einer Urethan-Bindung und stehen somit in Konkurrenz zum Novolak, der eigentlichen Polyol-Komponente, so dass deren Verwendung i.d.R. nicht vorteilhaft ist. Diese können jedoch zu den aprotischen Lösungsmitteln zugemischt werden und können dann beispielsweise als Lösungsvermittel und/oder Vernetzer bei mehrfunktionellen Alkoholen dienen.

Beispiele für geeignete erste Lösungsmittel sind acyclische oder cyclische Ketone wie Aceton, Cyclohexanon oder Isophoron oder acyclische und cyclische Ester wie Triacetin, Diacetin oderMonoacetin, Dicarbonsäureester wie z.B. Dimethylester von Dicarbonsäuren wie Dimethylglutarat, Dimethylsuccinat und Dimethyladipat oder Mischungen daraus, wie der sogenannte Dibasische Ester, Kohlensäureester wie Dimethyl-, Propylen- oder Ethylencarbonat, Lactone wie alpha-, beta, gamma oder delta Lactone wie z.B. gamma-Butyrolacton, Glykoletherester wie Propyleneglykolmethyletheracetat oder Butylglykolacetat sowie Glykoldiester wie Propylenglykoldiacetat, Triethylenglykoldiacetat oder Ethylendglykoldiacetat.

Überraschenderweise wurde gefunden, dass Kieselsäureester wie Tetramethyl-, Tetraethyl- oder Tetrapropylorthosilikat ebenfalls geeignete erste Lösungsmittel sind und den Novolak lösen bzw. anlösen.

Das erste Lösungsmittel ist vorzugsweise polar mit einem Dipolmoment größer 0 Debye und bevorzugt größer 1 Debye.

Das erste Lösungsmittel gegebenenfalls beinhaltend Katalysator (siehe Abschnitt 8) weist eine Viskosität (Brookfield, 25°C) von 0 bis 50 mPas, bevorzugt von 0,1 bis 40 mPas, besonders bevorzugt von 0,2 bis 30 mPas und insbesondere bevorzugt von 0,5 bis 20 mPas bei 25°C auf.

Das erste Lösungsmittel gegebenenfalls beinhaltend Katalysator weist vorzugsweise weiterhin eine Oberflächenspannung von 5 mN/m bis 90 mN/m, bevorzugt von 10 mN/m bis 80 mN/m, besonders bevorzugt von 15 mN/m bis 75 mN/m und insbesondere bevorzugt von 20 mN/m bis 70 mN/m auf, bestimmt mit der Plattenmethode nach Wilhelmy mit einem Force Tensiometer K100 von Krüss bei 20°C. Zur Absenkung der Oberflächenspannung ist es möglich das Lösungsmittel zusätzlich mit obeflächenaktiven Substanzen zu modifizieren.

Der Anteil des ersten Lösungsmittels liegt vorzugsweise bei 20 Gew.% bis 300 Gew.%, bevorzugt bei 30 Gew.%, bis 150 Gew.% und besonders bevorzugt bei 40 Gew.%, bis 90 Gew.%, bezogen auf den Novolak (ohne etwaigen Träger) unabhängig davon ob Formgrundstoff eingesetzt wird oder nicht.

Zur Steuerung der Aushärtegeschwindigkeit kann dem ersten Lösungsmittel wahlweise ein wie in Abschnitt (7 beschriebenes zweites Lösungsmittel zum Verlangsamen der Reaktion oder ein Katalysator (Abschnitt 8) zur Beschleunigung der Reaktion zugesetzt werden.

### (6) Isocyanat-Komponente

Die Isocyanat-Komponente umfasst zumindest ein Polyisocyanat. Geeignete Polyisocyanate sind Diisocyanate eines aromatischen Kohlenwasserstoffs mit 6 bis 15 Kohlenstoffatomen wie 2,6-Phenylendiisocyanat, 2,4-Phenylendiisocyanat, 2,2'-Methylendiphenylisocyanat, 2,4'-Methylendiphenylisocyanat, 4,4'- Methylendiphenylisocyanat, Toluol-2,4-diisocyanat oder Toluol-2,6-diisocyanat, Diisocyanate eines aliphatischen Kohlenwasserstoffs mit 4 bis 15 Kohlenstoffatomen wie 1,6-Hexamethylendiisocyanat, und/oder Diisocyanate eines cycloaliphatischen Kohlenwasserstoffs mit 6 bis 15 Kohlenstoffatomen wie Isophorondiisocyanat oder 1,4-Cyclohexyldiisocyanat.

Weitere geeignete aliphatische Polyisocyanate sind z.B. Hexamethylendiisocyanat, alicyclische Polyisocyanate wie z.B. 4,4'-Dicyclohexyl-methandiisocyanat und Dimethylderivate hiervon. Beispiele geeigneter aromatischer Polyisocyanate sind Toluol-2,4-diisocyanat (TDI), Toluol-2,6-diisocyanat, 1,5-Naphthalendiisocyanat, Triphenylmethantriisocyanat, Xylylendiisocyanat und Methylderivate hiervon sowie Polymethylenpolyphenylisocyanate wie Diphenylmethan-2,2'-diisocyanat, Diphenylmethan-2,4'-diisocyanat und/oder Diphenylmethan-4,4'-diisocyanat (Diese werden einzeln und als Gemisch als MDI bezeichnet). Die Polyisocyanate können auch derivatisiert sein, indem zweiwertige Isocyanate derart miteinander umgesetzt werden, dass ein Teil ihrer Isocyanatgruppen zu Isocyanurat-, Biuret-, Allophanat-, Uretdion- oder Carbodiimidgruppen derivatisiert ist. Geeignet sind z.B. Uretdion-Gruppen aufweisende Dimerisierungsprodukte, z.B. von Diphenylmethandiisocyanaten oder Toluoldiisocyanaten. Geeignete modifizierte Isocyanate sind Uretonimin- und/oder Carbodiimid modifizierte 4,4'- Diphenylmethandiisocyanate.

Typische Handelsprodukte sind Lupranat MM 103, Fa. *BASF Polyurethans* (Carbodiimid modifiziertes 4,4'-Di-phenylmethandiisocyanat) oder Suprasec 2385 Fa. *Huntsman* (Uretonimin-modifiziertes MDI). Diese enthalten von 10 bis zu 35 Gew.% Uretonimin und/oder Carbodiimid-modifizierte Isocyanat Verbindungen.

Die eingesetzte Isocyanat-Komponente weist vorzugsweise eine mittlere_Isocyanat-gruppenfunktionalität pro Molekül von größer gleich 2 auf.

Die Isocyanat-Komponente kann als Feststoff in partikulärer, rieselfähiger Form, als Flüssigkeit oder in Lösung eingesetzt werden.

Die Isocyanat-Komponente wird bevorzugt in flüssiger Form eingesetzt. Wenn die Isocyanat-Komponente selbst nicht in ausreichend niedrigviskoser Form vorliegt, so dass sie zu der Formstoffmischung dosiert werden kann, muss die Isocyanat-Komponente in einem geeigneten zweiten Lösungsmittel gelöst vorliegen, um die Isocyanat-Komponente in einen ausreichend niedrigviskosen Zustand zu überführen. Dieser ist u. a. erforderlich, um eine gleichmäßige Benetzung und anschließende Vernetzung des feuerfesten Formstoffes zu erhalten oder die Isocyanat-Komponente besser dosieren zu können.

Die Zugabemenge der Isocyanat-Komponente beträgt üblicherweise 10 bis 500 Gew.%, bevorzugt 30 bis 300 Gew.%, und besonders bevorzugt 40 bis 100 Gew.%, bezogen auf den Novolak. Ist der Novolak geträgert, geht in diese Kalkulation das Trägermaterial nicht ein.

Auf die Baustoffmischung bezogen, wenn in dieser kein Baugrundstoff vorhanden ist, wird die Isocyanat-Komponente in einer Konzentration von 10 bis 90 Gew.%, bevorzugt von 20 Gew.% bis 80 Gew.% und besonders bevorzugt von 30 Gew.% bis 70 Gew.% eingesetzt.

### (7) Zweites Lösungsmittel

Das zweite Lösungsmittel ist lediglich fakultativ. Geeignete zweite Lösungsmittel sind organische, unpolare Lösungsmittel oder Kombinationen verschiedener unpolarer organischer Lösungsmittel, die die besondere Eigenschaft haben, den Novolak nicht zu lösen und auch nicht anzulösen. Anzulösen meint, dass der partikuläre Novolak oberflächlich klebrig wird und verbackt. Dies ist nicht gewünscht.

Geeignete Lösungsmittel sind alipatische und cycloaliphatische Kohlenwasserstoffe mit 5-15 Kohlenstoffatomen wie n-Pentan und n-Hexan oder aromatische Kohlenwasserstoffe mit 6-15 Kohlenstoffatomen wie z.B. Benzol, Toluol, Diisopropylnaphthalin, Alkylbenzole (z.B. Marlican® oder Wibarcan®) oder unter der Bezeichnung Solvent Naphtha bekannte aromatische Lösungsmittel. Die Zugabemenge des zweiten Lösungsmittels sollte so gestaltet sein, dass die Viskosität der Isocyanat-Komponente beinhaltend Lösungsmittel in einem Bereich von 0-400 mPas und besonders bevorzugt in einem Bereich von 0-150 mPas liegt, jeweils bezogen auf 25°C. Manche Isocyanat-Typen, wie das Uretonimin-modifizierte MDI Suprasec 2385, Fa. *Huntsman,* sind bereits von ihrer Beschaffenheit so niedrigviskos, dass eine weitere Verdünnung mit einem zweiten, unpolaren Lösungsmittel nicht notwendig ist.

Für das erfindungsgemäße Verfahren werden zumindest ein erstes Lösungsmittel, das den Novolak löst und ggf. auch ein zweites Lösungsmittel, das zumindest das Polyisocyanat löst, nicht aber den Novolak, verwendet.

### (8) Katalysator

Geeignete Katalysatoren sind vor allem tertiäre Amine, insbesondere solche aufweisend einen pK_{B}-Wert von 3 bis 11, insbesondere 4 bis 11 bei Umgebungstemperatur (25°C) in fester und flüssiger Form, löslich im ersten Lösungsmittel. Beispiele für geeignete Katalysatoren sind Trialkylamine wie Trimethylamin, Triethylamin, Hexamethylentetramin oder Dimethylcylcohexylamin, Heteroaromaten umfassend Pyridine wie Pyridin selbst, 4-Aminopyridin, 2,4,6-Trimethylpyridin, 2-Ethanolpyridin, 4-Phenylpropylpyridin, Bipyridine wie 2,2'-Bipyridin oder 4,4'-Bipyridin, Imidazole wie 1-Ethylimidazol, 1-Methylbenzimidazol oder 1,2-Dimethylimidazol. Als besonders bevorzugt erwiesen haben sich Katalysatoren wie 2-Ethanolpyridin, 4-Phenylpropylpyridin, 1-Ethylimidazol oder Dimethylcylcohexylamin.

Denkbar ist außerdem die Verwendung von Organometallkatalysatoren wie unter anderem Dibutylzinndilaurat oder Metalloktanoate des Zinns oder Cobalts sowie Metalloxide z.B. des Eisens oder Zinks.

Die Zugabe des Katalysators erfolgt bevorzugt zusammen mit dem ersten Lösungsmittel als zu verdruckende Komponente oder aber in Form eines rieselfähigen, partikulären Feststoffes zu der Formstoffvormischung umfassend Novolak und Isocyanat-Komponente und ggf. Formstoff bzw. in Form eines Croningsandes zusammen mit dem Novolak auf den Formgrundstoff geträgert in einem Bereich von größer 0 Gew.% bis ca. 10 Gew.%, bevorzugt von ca. 0,05 Gew.% bis ca. 8 Gew.%, besonders bevorzugt von ca. 0,1 Gew.% bis ca. 5 Gew.% und insbesondere bevorzugt von ca. 0,15 Gew.% bis ca. 3 Gew.% bezogen auf den Novolak.

Wenn kein Formgrundstoff verwendet wird, wird der Katalysator in einem Bereich von größer 0 Gew.% bis ca. 10 Gew.%, bevorzugt von ca. 0,05 Gew.% bis ca. 8 Gew.%, besonders bevorzugt von ca. 0,1 Gew.% bis ca. 5 Gew.% und insbesondere bevorzugt von ca. 0,15 Gew.% bis ca. 3 Gew.% bezogen auf den Novolak (ohne etwaigem Träger) eingesetzt.

Möglich ist ebenfalls, dass alkalische Regeneratsande mit einem pH-Wert größer 7,5, bevorzugt mit einem pH-Wert größer 8, beispielsweise erhalten aus dem ColdBox-Verfahren, eine katalytische Aktivität besitzen, wenn sie dem Formgrundstoff in Mengen von 0,1 Gew.% bis 100 Gew.%, bevorzugt von 0,5 Gew.% bis 90 Gew.% und besonders bevorzugt von 1 Gew.% bis 80 Gew.% zugesetzt werden.

### (9) Additive

Neben den bereits erwähnten Bestandteilen kann die Baustoffmischung geeignete Additive enthalten. Dazu gehören z. B. Silane (z.B. gemäß EP 1137500 B1) zur Oberflächenmodifizierung, die wahlweise zusammen mit der Isocyanat-Komponente oder dem ersten Lösungsmittel zur Formstoffmischung bzw. Baustoffmischung dazu gegeben werden. Geeignete Silane sind beispielsweise Aminosilane, Epoxysilane, Mercaptosilane, Hydroxysilane und Ureidosilane, wie gamma-Hydroxypropyltrimethoxysilan, gamma-Aminopropyltrimethoxysilan, 3-Ureidopropy-Itriethoxysilan, gamma-Mercaptopropyltrimethoxysilan, gamma-Glycidoxypropyltrimethoxysilan, beta-(3,4-Epoxycyclohexyl)trimethoxysilan und N-beta-(Aminoethyl)-gamma-aminopropyltrimethoxysilan oder weithin Polysiloxane. Die Zugabemengen der Silane liegen zwischen 0-5%, bevorzugt zwischen 0-2% und besonders bevorzugt zwischen 0-1% bezogen auf den Novolak (ohne etwaigen Träger).

Des Weiteren können der Formstoffmischung organische oder mineralische Additive, wie Eisenoxide, Silikate, Aluminate, Holzmehle oder Stärken zur Gußfehlervermeidung in Menge von 0-10%, bevorzugt in Mengen von 0-7% und besonders bevorzugt in Mengen von 0-5% zugesetzt werden. Plastifizierer wie Fettsäuren, Silicone oder Pthalate zur Verbesserung der Flexibilität in Mengen von 0-8%, bevorzugt von 0-6% und besonders bevorzugt in Mengen von 0-5% bezogen auf den Formgrundstoff oder die Baustoffmischung können gegebenenfalls ebenfalls eingesetzt werden.

Die Erfindung wird im Weiteren anhand von Versuchsbeispielen erläutert ohne auf diese beschränkt zu sein.

### Beispiele

### Herstellung der Formstoffmischungen und Prüfkörper

Für die Prüfung der Formstoffmischungen wurden quaderförmige Prüfriegel mit den Abmessungen 220 mm x 22,36 mm x 22,36 mm hergestellt (sog. Georg-Fischer-Riegel).

Der Formgrundstoff (D) wurde dazu in die Schüssel eines Flügelmischers der Firma *Beba* eingefüllt. Unter Rühren wurden anschließend zuerst die Novolak-Komponente (A) und dann die Isocyanat-Komponente (B) zugegeben und jeweils 1 Minute intensiv mit dem Formgrundstoff vermischt. Anschließend wurde das erste Lösungsmittel (C) enthaltend Katalysator zur Formstoffmischung zugegeben und eine weitere Minute gerührt.

Ein Teil der hergestellten Formstoffmischungen wurde in ein Formwerkzeug mit 8 Gravuren eingebracht, durch Pressen mit einer Handplatte verdichtet und nach Ablauf der Ausschalzeit dem Formwerkzeug entnommen.

### Bestimmung der Verarbeitungs- und Ausschalzeit

Die Verarbeitungszeit (VZ), d.h. die Zeit, innerhalb derer sich eine Formstoffmischung problemlos verdichten lässt, wurde visuell bestimmt. Man kann das Überschreiten der Verarbeitungszeit daran erkennen, dass eine Formstoffmischung nicht mehr frei fließt, sondern schollenartig abrollt. Zur Ermittlung der Ausschalzeit (AZ), d.h. der Zeit, nach der sich eine Formstoffmischung soweit verfestigt hat, dass sie dem Formwerkzeug entnommen werden kann, wurde ein zweiter Teil der jeweiligen Mischung von Hand in eine Rundform von 100 mm Höhe und 100 mm Durchmesser eingefüllt und ebenfalls mit einer Handplatte verdichtet. Anschließend wurde die Oberflächenhärte der verdichteten Formstoffmischung in bestimmten Zeitintervallen mit dem Georg-Fischer-Oberflächenhärteprüfer getestet. Sobald eine Formstoffmischung so hart ist, dass die Prüfkugel nicht mehr in die Kernoberfläche eindringt, ist die Ausschalzeit erreicht.

### Bestimmung der Biegefestigkeiten

Zur Bestimmung der Biegefestigkeiten wurden die Prüfriegel in ein Georg-Fischer-Festigkeitsprüfgerät, ausgerüstet mit einer 3-Punkt-Biegevorrichtung, eingelegt und die Kraft gemessen, welche zum Bruch der Prüfriegel führte. Die Biegefestigkeiten wurden nach folgendem Schema bestimmt:
- 1 Stunde nach dem Formen
- 2 Stunden nach dem Formen
- 4 Stunden nach dem Formen
- 24 Stunden nach dem Formen
- 24 Stunden nach dem Formen plus 30 Min. Nachtempern bei 120°C nach dem Ausschalen

### Versuch 1: Novolak- und Isocyanat-Komponente

100 Gewichtsteile (GT) Quarzsand H32 werden mit der Novolak-Komponente und Isocyanat-Komponente vorgemischt und anschließend mit dem ersten Lösungsmittel enthaltend Katalysator vermischt.
Für die Art und Mengen der einzelnen Komponenten siehe Tabelle 1.

**Tabelle 1**

| **Mischung** | **Formgrundstoff [100 GT]** | **Novolak [GT]** | **Isocyanat [GT]** | **Lösungsmittel-Katalysator [GT]** |
|---|---|---|---|---|
| 1 | H 32 ⁽ⁱ⁾ | 0,5^{(a)} | 0,8^{(d)} | 0,5^{(f)} |
| 2 | H 32 ⁽ⁱ⁾ | 0,7^{(a)} | 0,8^{(d)} | 0,5^{(f)} |
| 3 | H 32 ⁽ⁱ⁾ | 0,9^{(a)} | 0,8^{(d)} | 0,5^{(f)} |
| 4 | H 32 ⁽ⁱ⁾ | 0,7^{(a)} | 0,6^{(e)} | 0,5^{(f)} |
| 5 | H 32 ⁽ⁱ⁾ | 0,7^{(b)} | 0,6^{(e)} | 0,5^{(f)} |
| 6 | H 32 ⁽ⁱ⁾ | 0,7^{(c)} | 0,6^{(e)} | 0,5^{(f)} |
| 7 | H 32 ⁽ⁱ⁾ | 1,0^{(a)} | 1,0^{(d)} | 0,4^{(g)} |
| 8 | H 32 ⁽ⁱ⁾ | 1,0^{(a)} | 1,0^{(d)} | 0,4^{(h)} |

| | | | | |
|---|---|---|---|---|
| a) ein unmodifizierter Novolak auf der Basis von Phenol und Formaldehyd bezeichnet durch eine Fließstrecke von 16-20 mm (PF 0235 DP, Hexion) b) ein unmodifizierter Novolak auf der Basis von Phenol und Formaldehyd bezeichnet durch eine Fließstrecke von 50-80 mm (Resin 2162, Chemiplastica) c) ein unmodifizierter Novolak auf der Basis von Phenol und Formaldehyd bezeichnet durch eine Fließstrecke von 40-60 mm (Resin 2173 F, Chemiplastica) d) 70% Polymethylenpolyphenylisocyanate gelöst in Solvent Naphtha e) Uretonimin-modifiziertes Polymethylenpolyphenylisocyanate (Suprasec 2385, Huntsman) f) DBE (Dibasischer Ester) enthaltend 0,5 Gew.% 4-Phenylpropylpyridin g) DBE enthaltend 2 Gew.% 4-Phenylpropylpyridin h) Propylencarbonat enthaltend 3 Gew.% 4-Phenylpropylpyridin. i) Quarzsand Haltern Quarzwerke | | | | |

Die Verarbeitungs-und Ausschalzeiten sowie die Biegefestigkeiten der einzelnen Mischungen sind in Tabelle 2 angegeben.

**Tabelle 2**

| | | | **Biegefestigkeiten [N/cm²]** | | | |
|---|---|---|---|---|---|---|
| **Mischung** | **VZ^{(a)}/AZ^{(b)} [Min.]** | | **1 Std.** | **2 Std.** | **4 Std.** | **24 Std.** |
| 1 | 10 | 30 | 20 | 40 | 60 | 230 |
| 2 | 3 | 25 | 60 | 110 | 150 | 250 |
| 3 | 1 | 20 | 70 | 110 | 130 | 220 |
| 4 | 3 | 15 | 130 | 160 | 210 | 260 |
| 5 | 42 | 900 | n.b. | n.b. | n.b. | 260 |
| 6 | 45 | 960 | n.b. | n.b. | n.b. | 300 |
| 7 | 1 | 50 | 10 | 10 | 10 | 70 |
| 8 | 1 | 30 | 20 | 30 | 40 | 120 |

| | | | | | | |
|---|---|---|---|---|---|---|
| (a) Verarbeitungszeit (b) Ausschalzeit n.b. = nicht bestimmt | | | | | | |

Es zeigt sich, dass sich durch Variation der einzelnen Komponenten in ihrer Art oder in ihrer Zugabemenge die Verarbeitungs- und Ausschalzeiten der Formstoffmischungen gezielt steuern lassen.

### Versuch 2: Formgrundstoff und Nachhärtung

Zu 100 GT eines Formgrundstoffs werden mit 0,7 GT der Novolak-Komponente und 0,6 GT der Isocyanat-Komponente gegeben und vermischt und anschließend mit 0,5 GT des ersten Lösungsmittel-Katalysator-Gemischs vermischt.

Für die Art des Formgrundstoffs und der Bindemittel-Komponenten siehe Tabelle 3.

**Tabelle 3**

| **Mischung** | **Formgrundstoff [100 GT]** | **Novolak ^{(a)} [GT]** | **Isocyanat ^{(b)} [GT]** | **Lösungsmittel-Katalysator ^{(c)} [GT]** |
|---|---|---|---|---|
| 1 | H 32 ^{(d)} | 0,7 | 0,6 | 0,5 |
| 3 | Spherichrome ^{(e)} | 0,7 | 0,6 | 0,5 |
| 4 | Cerabeads ^{(f)} | 0,7 | 0,6 | 0,5 |

| | | | | |
|---|---|---|---|---|
| a) ein Novolak auf der Basis von Phenol und Formaldehyd bezeichnet durch eine Fließstrecke von 16-20 mm (PF 0235 DP, Hexion) b) Uretonimin-modifiziertes Polymethylenpolyphenylisocyanate (Suprasec 2385, Huntsman) c) DBE enthaltend 0,5 Gew.% 4-Phenylpropylpyridin d) Quarzsand Haltern Quarzwerke e) Chromitsand (Oregon Resoures Corporation- in Europa -Fa. Possehl Erzkontor GmbH) f) Cerabeads 650 | | | | |

Die Verarbeitungs-und Ausschalzeiten sowie die Biegefestigkeiten der einzelnen Mischungen sind in Tabelle 4 angegeben.

**Tabelle 4**

| | | | **Biegefestigkeiten [N/cm²]** | | | | |
|---|---|---|---|---|---|---|---|
| **Mischung** | **VZ ^{(a)} / AZ ^{(b)} [Min.]** | | **1 Std.** | **2 Std.** | **4 Std.** | **24 Std.** | **24 Std ^{(c)} 120°C/30Min/kalt** |
| 1 | 2 | 9 | 160 | 180 | 200 | 300 | 420 |
| 2 | 12 | 85 | 30 | 60 | 180 | 760 | n.b. |
| 3 | 1 | 18 | 15 | 30 | 70 | 180 | n.b. |

| | | | | | | | |
|---|---|---|---|---|---|---|---|
| (a) Verarbeitungszeit (b) Ausschalzeit (c) 24h alte Kerne /30 Min bei 120°C getempert / Festigkeiten - nach Abkühlen gemessen n.b. = nicht bestimmt | | | | | | | |

Je nach Art des Formstoffs können Reaktivität und Festigkeiten variieren. Durch anschließende Nachhärtung im Ofen kann das Festigkeitsniveau um bis zu 40% gesteigert werden.

### Versuch 3: Lebenszeit der Formstoffmischung bestehend aus Formgrundstoff (D), Komponente (A) und Komponente (B)

100 GT Formgrundstoff wurden mit 0,8 GT Novolak-Komponente und 0,8 GT Isocyanat-Komponente vorgemischt. Zur Untersuchung der Lebenszeit dieser Vormischung wurde a) unmittelbar (Mischung 1) und b) 72 h nach Herstellen (Mischung 2) mit dem ersten Lösungsmittel-Katalysator-Gemisch weiter vermischt.

Für die Art der einzelnen Komponenten siehe Tabelle 5.

**Tabelle 5**

| **Mischung** | **Formgrundstoff [100 GT]** | **Novolak ^{(a)} [GT]** | **Isocyanat ^{(b)} [GT]** | **Lösungsmittel^{c)}-Katalysator [GT]** |
|---|---|---|---|---|
| 1 | H 32 ^{(d)} | 0,8 | 0,8 | 0,5 |
| 2 | H 32 ^{(d)} | 0,8 | 0,8 | 0,5 |

| | | | | |
|---|---|---|---|---|
| a) ein unmodifizierter Novolak auf der Basis von Phenol und Formaldehyd bezeichnet durch eine Fließstrecke von 16-20 mm (PF 0235 DP, Hexion) b) Uretonimin-modifiziertes Polymethylenpolyphenylisocyanate (Suprasec 2385, Huntsman) c) DBE enthaltend 1 Gew.% 4-Phenylpropylpyridin d) Quarzsand Haltern Quarzwerke | | | | |

Die Verarbeitungs-und Ausschalzeiten sowie die Biegefestigkeiten der einzelnen Mischungen sind in Tabelle 6 angegeben.

**Tabelle 6**

| | | | **Biegefestigkeiten [N/cm²]** | | | |
|---|---|---|---|---|---|---|
| **Mischung** | **VZ ^{(a)} / AZ ^{(b)} [Min.]** | | **0,5 Std.** | **1 Std.** | **2 Std.** | **24 Std.** |
| 1 | 1 | 10 | 80 | 90 | 120 | 160 |
| 2 | 1 | 20 | 50 | 70 | 100 | 140 |

| | | | | | | |
|---|---|---|---|---|---|---|
| (a) Verarbeitungszeit (b) Ausschalzeit | | | | | | |

Überraschenderweise wurde festgestellt, dass selbst nach 72 h Lagerung der Formstoffmischung bestehend aus Komponenten (A), (B) und dem Formgrundstoff (D) die Endfestigkeiten nur um etwa 12% niedriger sind.

Somit kann der nicht mit erstem Lösungsmittel bedruckte ungebundene Formstoff zum einen vorgemischt und für längere Zeit gelagert werden und zum anderen auch nach dem Druckprozess von dem zumindest teilgehärteten Formkörper wieder entfernt und der Produktion einer weiteren Form zugeführt werden, ohne dass signifikante Eigenschaftsverluste zu befürchten sind.

### Versuch 4: Gießversuche

Gießformen, die unter Verwendung eines Novolak/lsocyanat/erstes Lösungsmittel-Formstoffgemischs hergestellt wurden zeigten beim ungeschlichteten Abguss mit Eisen bei 1400°C eine vergleichbare Gussoberfläche wie Standard-ColdBox- oder PEP SET Systeme.

### Versuch 5: Hot-Distortion-Messunaen (Heiß-Deformation)

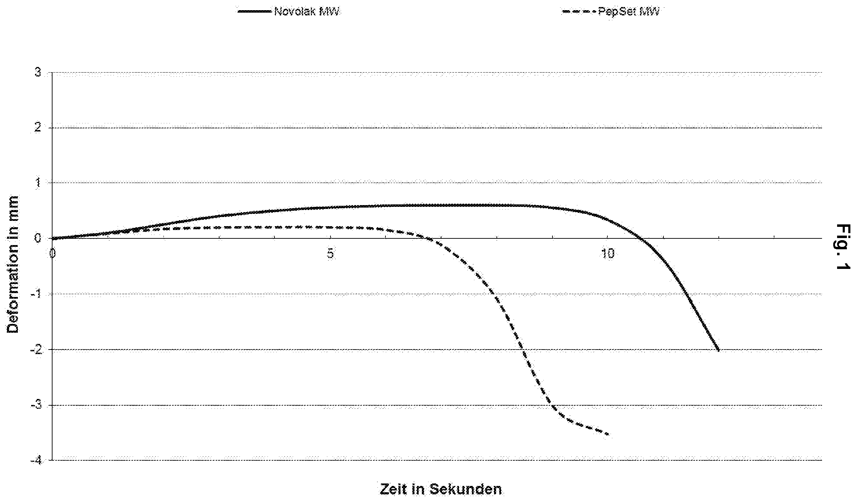

Kerne, die unter Verwendung eines Novolak/lsocyanat/erstes Lösungsmittel-Formstoffgemischs hergestellt wurden zeigten deutlich verbesserte Deformationseigenschaften als Standard-ColdBox- oder PEP SET Systeme. (Aus Fig. 1. wird deutlich das ein Novolak/lsocyanat/erstes Lösungsmittel gebundener Kern aus Formgrundstoff (durchgezogene Kurve) bei Wärmebeaufschlagung (T = 600°C) deutlich später deformiert als ein PEP SET gebunder Kern (gestrichelte Kurve) basierend auf dem gleichen Formgrundstoff, zu erkennen an dem späteren Schneiden der Deformationskurve an der x-Achse. Die Deformationseigenschaften wurden mit einem Hot Distortion Tester Modell 42114 der Firma Simpson untersucht. Dargestellt ist jeweils ein Mittelwert (MW) aus drei Einzelmessungen

## Patentansprüche

1. Verfahren zum schichtweisen Aufbau von Körpern umfassend zumindest die folgenden Schritte:
a) Bereitstellen einer Baustoffmischung umfassend zumindest einen Novolak als Feststoff,
und eine Isocyanat-Komponente umfassend ein Polyisocyanat;
b) Ausbreiten einer Schicht der Baustoffmischung mit einer Schichtdicke von 0,05 mm bis 3 mm;
c) Bedrucken ausgewählter Bereiche der Schicht mit einem ersten Lösungsmittel, wobei das erste Lösungsmittel den Novolak zumindest teilweise löst; und
d) mehrfaches Wiederholen der Schritte b) und c).

2. Verfahren gemäß Anspruch 1, wobei die Baustoffmischung weiterhin einen partikulären Formgrundstoff umfasst, vorzugsweise einen feuerfesten Formgrundstoff und der feuerfeste Formgrundstoff vorzugsweise Quarz-, Zirkon- oder Chromerzsand, Olivin, Vermiculit, Bauxit, Schamotte, Glasperlen, Glasgranulat, Aluminiumsilikatmikrohohlkugeln und deren Mischungen umfasst.

3. Verfahren gemäß Anspruch 1 oder 2, wobei der Novolak in Form eines rieselfähigen partikulären Feststoffs mittlere Durchmesser zwischen 0,1 µm und 700 µm, bevorzugt zwischen 0,5 µm und 550 µm und besonders bevorzugt zwischen 1 µm und 300 µm aufweist, wobei der Durchmesser nach der Methode der Beschreibung bestimmt wird.

4. Verfahren gemäß Anspruch 2, wobei der Formgrundstoff zumindest teilweise mit dem Novolak umhüllt ist, vorzugsweise in Abwesenheit von Hexamethylentetramin.

5. Verfahren gemäß Anspruch 2, wobei der Formgrundstoff mit dem Novolak umhüllt ist in Form eines Croning Sandes in Gegenwart von größer 0 bis 10 Gew.%, bevorzugt von 0,05 bis 8 Gew.%, besonders bevorzugt von 0,1 bis ca. 5 Gew.% und insbesondere bevorzugt von ca. 0,15 bis 3 Gew.% Hexamethylentetramin, bezogen auf den Novolak.

6. Verfahren gemäß zumindest einem der vorhergehenden Ansprüche, wobei die Isocyanat-Komponente wahlweise in Form eines partikulären Feststoffes, einer Flüssigkeit oder einer Lösung in einem zweiten Lösungsmittel vorliegt.

7. Verfahren gemäß zumindest einem der vorhergehenden Ansprüche, wobei das Polyisocyanat eine mittlere Isocyantgruppenfunktionalität pro Molekül von größer gleich 2 aufweist und vorzugsweise ein aromatisches oder aliphatisches Diisocyanat ist, insbesondere 2,2'-Methylendiphenylisocyanat, 2,4'-Methylendiphenylisocyanat, 4,4'- Methylendiphenylisocyanat oder Mischungen daraus ist und insbesondere ausgewählt ist aus: Polymethylendiphenylisocyanaten wie 2,2'-Methylendiphenylisocyanat, 2,4'-Methylendiphenylisocyanat und 4,4'- Methylendiphenylisocyanat, Toluol-2,4-diisocyanat, Toluol-2,6-diisocyanat, Uretdion-, Uretonimin- oder Carbodiimid-modifizierte Varianten, insbesondere Polymethylendiphenylisocyanate wie 2,2'-Methylendiphenylisocyanat, 2,4'-Methylendiphenylisocyanat und 4,4'-Methylendiphenylisocyanat oder Mischungen daraus oder deren Carbodiimid- oder Uretonimin-modifizierte Varianten.

8. Verfahren gemäß Anspruch 6, wobei das zweite Lösungsmittel ein organisches, unpolares Lösungsmittel ist, umfassend aliphatische und/oder cycloaliphatische Kohlenwasserstoffe mit 5 bis15 Kohlenstoffatomen oder aromatische Kohlenwasserstoffe mit 6 bis 15 Kohlenstoffatomen und Mischungen daraus und vorzugsweise Diisopropylnaphthalin, Alkylbenzole oder Solvent Naphtha oder deren Mischungen ist.

9. Verfahren gemäß einem der vorhergehenden Ansprüche, wobei das erste Lösungsmittel ein organisches Lösungsmittel, vorzugsweise ein organisches, aprotisches Lösungsmittel, ist, umfassend 1-25 Kohlenstoffatome, bevorzugt 1-15 Kohlenstoffatome und besonders bevorzugt 1-10 Kohlenstoffatome oder Mischungen daraus und vorzugsweise gebundenen Sauerstoff in Form einer oder mehrerer Keto-, Aldehyd- und/oder Ester-Gruppen aufweist, und insbesondere Ester wie Dimethylglutarat, Dimethylsuccinat oder Dimethyladipat, Kohlensäureester wie Propylen-, Ethylen oder Dimethylcarbonat, gamma-Butyrolacton, Triacetin, Tetraethylsilicat oder Mischungen daraus ist.

10. Verfahren gemäß zumindest einem der vorhergehenden Ansprüche, **gekennzeichnet durch** eines oder mehrere der folgenden Merkmale:
i) das erste Lösungsmittel ist ein polares Lösungsmittel und weist ein Dipolmoment von größer 0 Debye, besonders bevorzugt größer 0,7 Debye und insbesondere bevorzugt größer 1 Debye auf;
ii) das erste Lösungsmittel weist eine Viskosität (Brookfield 25°C) von 0 bis 50 mPas, bevorzugt von 0,1 bis 40 mPas, besonders bevorzugt von 0,2 bis 30 mPas und insbesondere bevorzugt von 0,5 bis 20 mPas auf;
iii) das erste Lösungsmittel weist bei 20°C eine Oberflächenspannung von 5 mN/m bis 90 mN/m, bevorzugt von 10 mN/m bis 80 mN/m, besonders bevorzugt von 15 mN/m bis 75 mN/m und insbesondere bevorzugt von 20 mN/m bis 70 mN/m auf, wobei die Oberflächenspannung nach der Methode der Beschreibung bestimmt wird.

11. Verfahren gemäß einem der vorhergehenden Ansprüche, wobei das erste Lösungsmittel einen Katalysator für die Urethanreaktion enthält und der Katalysator im Lösungsmittel gelöst ist.

12. Verfahren gemäß einem der vorhergehenden Ansprüche, wobei im ersten Lösungsmittel ein Katalysator gelöst ist und diese Lösung vorzugsweise eine Viskosität (Brookfield 25°C) von von 0 bis 50 mPas, bevorzugt von 0,1 bis 40 mPas, besonders bevorzugt von 0,2 bis 30 mPas und insbesondere bevorzugt von 0,5 bis 20 mPas aufweist.

13. Verfahren gemäß einem der Ansprüche 11 oder 12, wobei der Katalysator ein tertiärer Aminkatalysator ist, aufweisend einen pK_{B}-Wert von 3 bis 11, bevorzugt einen pK_{B}-Wert von 4 bis 11 und besonders bevorzugt einen pK_{B}-Wert von 5 bis 11, bei Umgebungstemperatur (25°C) fest oder flüssig ist oder löslich im ersten Lösungsmittel und der Aminkatalysator insbesondere 4-Phenylpropylpyridin, 2-Ethanolpyridin, N-Ethylimidazol, Dimethylcylcohexylamin oder Hexamethyletetramin oder deren Mischungen ist.

14. Verfahren gemäß mindestens einem der Ansprüche 1 bis 13, wobei der Katalysator als rieselfähiger, partikulärer Feststoff schichtweise als Teil der Baustoffmischung ausgebracht wird.

15. Verfahren gemäß Anspruch 2, wobei
i) der Formgrundstoff bzw. der feuerfeste Formgrundstoff mittlere Partikeldurchmesser von 30 µm bis 700 µm, bevorzugt zwischen 40 µm und 550 µm und besonders bevorzugt von 50 µm und 500 µm aufweist, bestimmt durch Siebung nach DIN ISO 3310; und/oder
ii) größer 80 Gew.%, vorzugsweise größer 90 Gew.%, und besonders bevorzugt größer 95 Gew.%, der Baustoffmischung Formgrundstoff sind, insbesondere feuerfester Formgrundstoff.

16. Verfahren gemäß zumindest einem der vorhergehenden Ansprüche, wobei Novolak, Isocyanat-Komponente, erstes Lösungsmittel und tertiäres Amin auch unabhängig voneinander wie folgt eingesetzt werden:
• 0,3 bis 20 Gew.%, bevorzugt 0,4 bis 10 Gew.%, besonders bevorzugt 0,5 bis 5 Gew.% Novolak bezogen auf den Baugrundstoff;
bzw. wenn kein Baugrundstoff eingesetzt wird von 10 Gew.% bis 90 Gew.%, bevorzugt von 20 Gew.% bis 80 Gew.% und besonders bevorzugt von 30 Gew.% bis 70 Gew.% Novolak, bezogen auf die Baustoffmischung;
• 10 bis 500 Gew.%, bevorzugt 30 bis 300 Gew.% und besonders bevorzugt 40 bis 100 Gew.% der Isocyanat-Komponente, bezogen auf den Novolak;
bzw. wenn kein Baugrundstoff eingesetzt wird, von 10 bis 90 Gew.%, bevorzugt von 20 Gew.% bis 80 Gew.% und besonders bevorzugt von 30 Gew.% bis 70 Gew.%, der Isocyanat-Komponente, bezogen auf die Baustoffmischung;
• 300 Gew.%, bevorzugt 30 bis 150 Gew.% und besonders bevorzugt 40-90 Gew.% des ersten Lösungsmittels bezogen auf den Novolak; und
• 0-10 Gew.%, bevorzugt 0,05-8 Gew.% und besonders bevorzugt 0,15-3 Gew.% des tertiären Amins, bezogen auf den Novolak

17. Verfahren nach zumindest einem der vorhergehenden Ansprüche umfassend weiterhin die folgenden Schritte:
i) Härtung des Körpers nach Beendigung des schichtweisen Aufbaus in einem Ofen oder mittels Mikrowelle und nachfolgendes
ii) Entfernen der ungebundenen Baustoffmischung von der zumindest teilgehärteten Gießform.

18. Verfahren nach zumindest einem der vorhergehenden Ansprüche, wobei das Bedrucken mit einem eine Vielzahl von Düsen aufweisenden Druckkopf erfolgt, wobei die Düsen vorzugsweise einzeln selektiv ansteuerbar sind, wobei der Druckkopf insbesondere ein Drop-on-Demand Druckkopf mit Bubble-Jet oder Piezo-Technik ist.

19. Verfahren nach Anspruch 16, wobei der Druckkopf zumindest in einer Ebene von einem Computer gesteuert bewegbar ist und die Düsen zumindest das erste Lösungsmittel schichtweise auftragen.

20. Form oder Kern herstellbar nach dem Verfahren nach zumindest einem der vorhergehenden Ansprüche für den Metallguss, insbesondere den Eisen-, Stahl-, Kupfer- oder Aluminium-Guss.

21. Komponentensystem zur Herstellung einer Baustoffmischung umfassend separat voneinander folgende Komponenten:
Komponente (A) einen Novolak in Form eines rieselfähigen partikulären Feststoffs,
Komponente (B) eine Isocyanat-Komponete umfassend ein zweites Lösungsmittel und zumindest ein Polyisocyanat mit zumindest zwei Isocyanatgruppen gelöst in dem zweiten Lösungsmittel;
Komponente (C) ein erstes Lösungsmittel, worin das tertiäre Amin löslich ist und welches den pulverförmigen Novolak zumindest teilweise löst,
wobei das erste Lösungsmittel ungleich dem zweiten Lösungsmittel ist und die aufgeführten Inhaltsstoffe der Komponenten jeweils nur in einer der Komponenten enthalten sind.

22. Komponentensystem gemäß Anspruch 21 wobei das Komponentensystem als weitere Komponente separat von den Komponenten (A) bis (C) umfasst:
Komponente (D) einen rieselfähigen partikulären Formgrundstoff, insbesondere einen rieselfähigen partikulären feuerfesten Formgrundstoff.

23. Komponentensystem gemäß Anspruch 21 oder 22, wobei das erste Lösungsmittel ein organisches, aprotisches Lösungsmittel ist, umfassend 1 bis 25 Kohlenstoffatome, bevorzugt 1 bis 15 Kohlenstoffatome und besonders bevorzugt 1 bis 10 Kohlenstoffatome oder Mischungen daraus und vorzugsweise gebundenen Sauerstoff in Form einer oder mehrerer Keto-, Aldehyd- und/oder Ester-Gruppen aufweist, und insbesondere Ester wie Dimethylglutarat, Dimethylsuccinat oder Dimethyladipat, Kohlensäureester wie Propylen-, Ethylen oder Dimethylcarbonat, gamma-Butyrolacton, Triacetin, Tetraethylsilicat oder Mischungen daraus ist.

24. Komponentensystem gemäß zumindest einem der Ansprüche 21 bis 23, **gekennzeichnet durch** eines oder mehrere der folgenden Merkmale:
i) das erste Lösungsmittel ist ein polares Lösungsmittel und weist ein Dipolmoment von größer 0 Debye, vorzugsweise größer 0,7 Debye und insbesondere bevorzugt größer 1 Debye auf;
ii) das erste Lösungsmittel weist eine Viskosität (Brookfield 25°C) von 0 bis 50 mPas, bevorzugt von 0,1 bis 40 mPas, besonders bevorzugt von 0,2 bis 30 mPas und insbesondere bevorzugt von 0,5 bis 20 mPas auf;
iii) das erste Lösungsmittel weist bei 20°C eine Oberflächenspannung von 5 bis 90 mN/m, bevorzugt von 10 bis 80 mN/m, besonders bevorzugt von 15 bis 75 mN/m und insbesondere bevorzugt von 20 bis 60 mN/m auf, wobei die Oberflächenspannung nach die Methode der Beschreibung bestimmt wird.

25. Rieselfähige Baustoffmischung umfassend:
• einen Novolak in Form eines rieselfähigen partikulären Feststoffs,
• eine Isocyanat-Komponente, umfassend zumindest ein Polyisocyanat mit zumindest zwei Isocyanatgruppen und
• einen partikulären Formgrundstoff, vorzugsweise einen feuerfesten Formgrundstoff,
wobei geträgerter Novolak, wie ein Croningsand, und der partikuläre Formgrundstoff eine Komponente bilden können.

26. Baustoffmischung gemäß Anspruch 25 umfassend weiterhin ein zweites Lösungsmittel, das das Polyisocyanat löst und vom ersten Lösungsmittel verschieden ist.

27. Baustoffmischung nach Anspruch 25 oder 26, wobei das zweite Lösungsmittel, der Novolak und die Isocyanat-Komponente durch einen der Ansprüche 1 bis 24 weiter gekennzeichnet sind.

## Claims

1. A method for the layerwise construction of bodies comprising at least the following steps:
a) providing a construction material mixture comprising at least:
a novolac as a solid,
and an isocyanate component comprising a polyisocyanate;
b) spreading a layer of the construction material mixture with a layer thickness of 0.05 mm to 3 mm;
c) printing selected regions of the layer with a first solvent, wherein the first solvent at least partially dissolves the novolac; and
d) multiple repetition of steps b) and c).

2. The method according to claim 1, wherein the construction material mixture further comprises a particulate mold base material, preferably a refractory mold base material, and the refractory mold base material preferably comprises quartz sand, zirconium sand or chrome ore sand, olivine, vermiculite, bauxite, fireclay, glass pearls, glass granulate, aluminum silicate hollow microspheres and mixtures thereof.

3. The method according to claim 1 or 2, wherein the novolac is in the form of a free-flowing particulate solid with an average diameter between 0.1 µm and 700 µm, preferably between 0.5 µm and 550 µm, and particularly preferably between 1 µm and 300 µm, wherein the diameter is measured according to the method of the description.

4. The method according to claim 2, wherein the mold base material is at least partially encased with the novolac, preferably in the absence of hexamethylene tetramine.

5. The method according to claim 2, wherein the mold base material is encased with the novolac in the form of a croning sand in the presence of more than 0% by weight to 10% by weight, preferably 0.05% by weight to 8% by weight, particularly preferably of 0.1% by weight to 5% by weight, and especially preferably of 0.15% by weight to 3% by weight hexamethylene tetramine relative to the novolac.

6. The method according to at least one of the preceding claims, wherein the isocyanate component is alternatively present in the form of a particulate solid, a liquid or a solution in a second solvent.

7. The method according to at least one of the preceding claims, wherein the polyisocyanate has an average isocyanate group functionality per molecule greater than or equal to 2 and is preferably an aromatic or aliphatic diisocyanate, in particular 2,2'-methylene diphenyl isocyanate, 2,4'-methylene diphenyl isocyanate, 4,4'-methylene diphenyl isocyanate or mixtures thereof, and in particular is selected from: Polymethylene diphenyl isocyanates such as 2,2'-methylene diphenyl isocyanate, 2,4'-methylene diphenyl isocyanate and 4,4'-methylene diphenyl isocyanate, toluene-2,4-diisocyanate, toluene-2,6-diisocyanate, uretdione, uretonimine- or carbodiimide-modified variants, in particular polymethylene diphenyl isocyanates such as 2,2'-methylene diphenyl isocyanate, 2,4'-methylene diphenyl isocyanate and 4,4'-methylene diphenyl isocyanate or mixtures thereof, or their carbodiimide- or uretonimine-modified variants.

8. The method according to claim 6, wherein the second solvent is an organic, nonpolar solvent, comprising aliphatic and/or cycloaliphatic hydrocarbons with 5 to 15 carbon atoms or aromatic hydrocarbons with 6 to 15 carbons and mixtures thereof, and preferably diisopropylnaphthalene, alkyl benzenes or solvent naphtha, or mixtures thereof.

9. The method according to one of the preceding claims, wherein the first solvent is an organic solvent, preferably an organic, aprotic solvent, comprising 1-25 carbon atoms, preferably 1-15 carbon atoms and particularly preferably 1-10 carbon atoms or mixtures thereof, and preferably comprises oxygen bound in the form of one or more keto-, aldehyde- and/or ester groups, and in particular esters such as dimethyl glutarate, dimethyl succinate or dimethyl adipate, carbonic acid esters such as propylene, ethylene or dimethyl carbonate, gamma-butyrolactone, triacetin, tetraethylsilicate and mixtures thereof.

10. The method according to at least one of the preceding claims, **characterised by** one or more of the following features:
i) the first solvent is a polar solvent and has a dipole moment greater than 0 debye, particularly preferably greater than 0.7 debye, and especially preferably greater than 1 debye
ii) the first solvent has a viscosity (Brookfield, 25°C) of 0 to 50 mPas, preferably of 0.1 to 40 mPas, particularly preferably of 0.2 to 30 mPas, and especially preferably of 0.5 to 20 mPas
iii) the first solvent has a surface tension of 5 mN/m to 90 mN/m, preferably of 10 mN/m to 80 mN/m, particularly preferably of 15 mN/m to 75 mN/m and especially preferably of 20 mN/m to 70 mN/m at 20°C, wherein the surface tension is measured according to the method of the description.

11. The method according to one of the preceding claims, wherein the first solvent contains a catalyst for the urethane reaction, and the catalyst is dissolved in the solvent.

12. The method according to one of the preceding claims, wherein a catalyst is dissolved in the first solvent, and this solution preferably has a viscosity (Brookfield, 25°C) of 0 to 50 mPas, preferably of 0.1 to 40 mPas, particularly preferably of 0.2 to 30 mPas, and especially preferably of 0.5 to 20 mPas.

13. The method according to one of claims 11 or 12, wherein the catalyst is a tertiary amine catalyst having a pK_{B} value of 3 to 11, preferably a pK_{B} value of 4 to 11, and particularly preferably a pK_{B} value of 5 to 11, is solid or liquid or dissolvable in a first solvent at an ambient temperature (25°C), and the amine catalyst is in particular 4-phenylpropylpyridine, 2-ethanolpyridine, N-ethylimidazole, dimethylcylcohexylamine or hexamethylene tetramine or mixtures thereof.

14. The method according to at least one of claims 1 to 13, wherein the catalyst is applied as a free-flowing, particulate solid in layers as part of the construction material mixture.

15. The method according to claim 2, wherein
i) the mold base material, or respectively the refractory mold base material has an average particle diameter of 30 µm to 700 µm, preferably between 40 µm and 550 µm, and particularly preferably of 50 µm and 500 µm, **characterised by** sifting according to DIN ISO 3310; and/or
ii) more than 80% by weight, in particular more than 90% by weight, and particularly preferably more than 95% by weight of the construction material mixture is mold base material, in particular refractory mold base material.

16. The method according to at least one of the preceding claims, wherein the novolac, isocyanate component, first solvent and tertiary amine are used, also independent of each other, as follows:
• 0.3 to 20% by weight, preferably 0.4 to 10% by weight, particularly preferably 0.5 to 5% by weight novolac relative to the construction base material;
or respectively, wherein no construction base material is used, 10% by weight to 90% by weight, preferably 20% by weight to 80% by weight, and particularly preferably 30% by weight to 70% by weight novolac relative to the construction material mixture;
• 10 to 500% by weight, preferably 30 to 300% by weight, and particularly preferably 40 to 100% by weight of the isocyanate component relative to the novolac;
or respectively, when no construction base material is used, 10% by weight to 90% by weight, preferably 20% by weight to 80% by weight, and particularly preferably 30% by weight to 70% by weight of the isocyanate component relative to the construction material mixture;
• 20 to 300% by weight, preferably 30 to 150% by weight, and particularly preferably 40-90% by weight of the first solvent relative to the novolac; and
• 0-10% by weight, preferably 0.05-8% by weight, and particularly preferably 0.15-3% by weight of the tertiary amine relative to the novolac.

17. The method according to at least one of the preceding claims, comprising moreover the following steps:
i) after termination of layerwise construction, hardening the body in an oven or by microwaving, and then
ii) removing the unbound construction material mixture from the at least partially hardened mold.

18. The method according to at least one of the preceding claims, wherein the printing is done with a print head having a plurality of nozzles, wherein the nozzles are preferably selectively controllable individually, wherein the print head is in particular a drop-on-demand print head with a bubble jet or piezo system.

19. The method according to claim 16, wherein the print head is movably controlled by a computer, at least in a plane, and the nozzles apply at least the first solvent in layers.

20. A mold or core producible according to the method according to at least one of the preceding claims for metal casting, in particular iron, steel, copper or aluminum casting.

21. A component system for producing a construction material mixture comprises the following components separately from each other:
Component (A) a novolac in the form of a free-flowing, particulate solid,
Component (B) an isocyanate component comprising a second solvent and at least one polyisocyanate with at least two isocyanate groups dissolved in the second solvent;
Component (C) a first solvent, wherein the tertiary amine is soluble and which at least partially dissolves the powdered novolac,
wherein the first solvent is different from the second solvent, and the listed contents of the components are only contained in one of the components.

22. The component system according to claim 21, wherein, as another component separate from components (A) to (C), the component system comprises the following:
Component (D) a free-flowing, particulate mold base material, in particular a free-flowing, particulate refractory mold base material.

23. The component system according to claim 21 or 22, wherein the first solvent is an organic, aprotic solvent, comprising 1 to 25 carbon atoms, preferably 1 to 15 carbon atoms and particularly preferably 1 to 10 carbon atoms or mixtures thereof, and preferably has bound oxygen in the form of one or more keto-, aldehyde- and/or ester groups, and in particular esters such as dimethyl glutarate, dimethyl succinate or dimethyl adipate, carbonic acid esters such as propylene, ethylene or dimethyl carbonate, gamma-butyrolactone, triacetin, tetraethylsilicate or mixtures thereof.

24. The component system according to at least one of claims 21 to 23, **characterised by** one or more of the following features:
i) the first solvent is a polar solvent and has a dipole moment greater than 0 debye, preferably greater than 0.7 debye, and especially preferably greater than 1 debye;
ii) the first solvent has a viscosity (Brookfield, 25°C) of 0 to 50 mPas, preferably from 0.1 to 40 mPas, particularly preferably from 0.2 to 30 mPas, and especially preferably from 0.5 to 20 mPas;
iii) the first solvent has a surface tension of 5 mN/m to 90 mN/m, preferably of 10 mN/m to 80 mN/m, particularly preferably of 15 mN/m to 75 mN/m and especially preferably of 20 mN/m to 60 mN/m at 20°C, wherein the surface tension is measured according to the method of the description.

25. A free-flowing construction material mixture comprising:
• a novolac in the form of a free-flowing, particulate solid,
• an isocyanate component comprising at least one polyisocyanate with at least two isocyanate groups, and
• a particulate mold base material, preferably a refractory mold base material,
wherein supported novolac such as a croning sand and the particulate mold base material can form a component.

26. The construction material mixture according to claim 25, further comprising a second solvent that dissolves the polyisocyanate and is different from the first solvent.

27. The construction material mixture according to claim 25 or 26, wherein the second solvent, the novolac and the isocyanate component are further **characterized by** one of claims 1 to 24.

## Revendications

1. Procédé de formation par couches de corps, comprenant au moins les étapes suivantes consistant à :
a) mettre à disposition un mélange de matériaux de construction, comprenant au moins une novolaque en tant que matière solide,
et un composant isocyanate comprenant un polyisocyanate ;
b) répandre une couche du mélange de matériaux de construction ayant une épaisseur de couche de 0,05 mm à 3 mm ;
c) imprimer des zones choisies de la couche avec un premier solvant, le premier solvant dissolvant au moins partiellement la novolaque ; et
d) répéter plusieurs fois les étapes b) et c).

2. Procédé selon la revendication 1, dans lequel le mélange de matériaux de construction comprend en outre une matière de base de moulage particulaire, de préférence une matière de base de moulage réfractaire, et la matière de base de moulage réfractaire comprend de préférence du sable de quartz, du sable de zircone ou du sable de minerai de chrome, de l'olivine, de la vermiculite, de la bauxite, de la chamotte, des perles de verre, du granulé de verre, des microsphères creuses de silicate d'aluminium et leurs mélanges.

3. Procédé selon la revendication 1 ou 2, dans lequel la novolaque se présente sous la forme d'une matière solide particulaire écoulable de diamètre moyen compris entre 0,1 µm et 700 µm, de préférence entre 0,5 µm et 550 µm et de manière particulièrement préférée entre 1 µm et 300 µm, le diamètre étant déterminé selon la méthode de la description.

4. Procédé selon la revendication 2, dans lequel la matière de base de moulage est enveloppée au moins partiellement de novolaque, de préférence en l'absence d'hexaméthylène tétramine.

5. Procédé selon la revendication 2, dans lequel la matière de base de moulage est enveloppée de novolaque, sous la forme d'un sable Croning en présence de plus de 0 à 10 % en poids, de préférence de 0,05 à 8 % en poids, de manière particulièrement préférée de 0,1 à environ 5 % en poids et de manière particulièrement préférée d'environ 0,15 à 3 % en poids d'hexaméthylène tétramine, par rapport à la novolaque.

6. Procédé selon au moins l'une des revendications précédentes, dans lequel le composant isocyanate se présente sélectivement sous la forme d'une matière solide particulaire, d'un liquide ou d'une solution dans un deuxième solvant.

7. Procédé selon au moins l'une des revendications précédentes, dans lequel le polyisocyanate présente une fonctionnalité moyenne des groupes isocyanate par molécule supérieure ou égale à 2 et est de préférence un diisocyanate aromatique ou aliphatique, en particulier l'isocyanate de 2,2'-méthylènediphényle, l'isocyanate de 2,4'-méthylènediphényle, l'isocyanate de 4,4'-méthylènediphényle, ou des mélanges de ceux-ci, et est notamment choisi à partir : des isocyanates de polyméthylènediphényle tels que l'isocyanate de 2,2'-méthylènediphényle, l'isocyanate de 2,4'-méthylènediphényle et l'isocyanate de 4,4'-méthylènediphényle, le 2,4-diisocyanate de toluène, le 2,6-diisocyanate de toluène, les variantes modifiées par l'urètedione, l'urétonimine, ou le carbodiimide, en particulier des isocyanates de polyméthylènediphényle tels que l'isocyanate de 2,2'-méthylènediphényle, l'isocyanate de 2,4'-méthylènediphényle et l'isocyanate de 4,4'-méthylènediphényle, ou des mélanges de ceux-ci et leurs variantes modifiées par le carbodiimide ou l'urétonimine.

8. Procédé selon la revendication 6, dans lequel le deuxième solvant est un solvant organique non polaire, comprenant des hydrocarbures aliphatiques et/ou cycloaliphatiques ayant de 5 à 15 atomes de carbone ou des hydrocarbures aromatiques ayant de 6 à 15 atomes de carbone et des mélanges de ceux-ci, et de préférence de la diisopropylnaphtaline, des alkylbenzènes ou le solvant naphta ou leurs mélanges.

9. Procédé selon l'une des revendications précédentes, dans lequel le premier solvant est un solvant organique, de préférence un solvant organique aprotique, comprenant 1 à 25 atomes de carbone, de préférence 1 à 15 atomes de carbone et de manière particulièrement préférée 1 à 10 atomes de carbone ou des mélanges de ceux-ci et de préférence de l'oxygène lié sous la forme d'un ou de plusieurs groupes kéto, aldéhyde et/ou ester, et en particulier ester comme le diméthylglutarate, le diméthylsuccinate ou le diméthyladipate, ester d'acide carboxylique comme le propylène carbonate, l'éthylène carbonate ou le diméthylcarbonate, la gamma-butyrolactone, la triacétine, le tétraéthylsilicate ou des mélanges de ceux-ci.

10. Procédé selon au moins l'une des revendications précédentes, **caractérisé par** l'une ou plusieurs des caractéristiques suivantes :
i) le premier solvant est un solvant polaire et présente un moment dipolaire supérieur à 0 debye, de manière particulièrement préférée supérieure à 0,7 debye et de manière tout particulièrement préférée supérieure à 1 debye ;
ii) le premier solvant présente une viscosité (Brookfield à 25°C) de 0 à 50 mPas, de préférence de 0,1 à 40 mPas, de manière particulièrement préférée de 0,2 à 30 mPas et de manière tout particulièrement préférée de 0,5 à 20 mPas ;
iii) le premier solvant présente à 20°C une tension superficielle de 5 mN/m à 90 mN/m, de préférence de 10 mN/m à 80 mN/m, de manière particulièrement préférée de 15 mN/m à 75 mN/m et de manière tout particulièrement préférée de 20 mN/m à 70 mN/m, la tension superficielle étant déterminée selon la méthode de la description.

11. Procédé selon au moins l'une des revendications précédentes, dans lequel le premier solvant contient un catalyseur pour la réaction uréthane et le catalyseur est dissous dans le solvant.

12. Procédé selon l'une des revendications précédentes, dans lequel un catalyseur est dissous dans le premier solvant et cette solution présente de préférence une viscosité (Brookfield à 25°C) de 0 à 50 mPas, de préférence de 0,1 à 40 mPas, de manière particulièrement préférée de 0,2 à 30 mPas et de manière tout particulièrement préférée de 0,5 à 20 mPas.

13. Procédé selon l'une des revendications 11 ou 12, dans lequel le catalyseur est un catalyseur amine tertiaire, présentant une valeur pK_{B} de 3 à 11, de préférence une valeur pK_{B} de 4 à 11, et de manière particulièrement préférée une valeur pK_{B} de 5 à 11, est solide ou liquide ou soluble dans le premier solvant à température ambiante (25°C) et le catalyseur aminé est en particulier la 4-phénylpropylpyridine, la 2-éthanolpyridine, le N-éthylimidazol, la diméthylcyclohexylamine ou l'hexaméthylènetétramine ou leurs mélanges.

14. Procédé selon au moins l'une des revendications 1 à 13, dans lequel le catalyseur est répandu en tant que matière solide particulaire écoulable par couches en tant que partie du mélange de matériaux de construction.

15. Procédé selon la revendication 2, dans lequel
i) la matière de base de moulage et/ou la matière de base de moulage réfractaire présente un diamètre moyen de particules de 30 µm à 700 µm, de préférence entre 40 µm et 550 µm et de manière particulièrement préférée entre 50 µm et 500 µm, déterminé par tamisage d'après la norme DIN ISO 3310 ; et/ou
ii) plus de 80 % en poids, de préférence plus de 90 % en poids et de manière particulièrement préférée plus de 95 % en poids du mélange de matériaux de construction sont la matière de base de moulage, en particulier la matière de base de moulage réfractaire.

16. Procédé selon au moins l'une des revendications précédentes, dans lequel la novolaque, le composant isocyanate, le premier solvant et l'aminé tertiaire sont mis en œuvre également indépendamment les uns des autres de la manière suivante :
• 0,3 à 20 % en poids, de préférence 0,4 à 10 % en poids, de manière particulièrement préférée de 0,5 à 5 % en poids de novolaque par rapport à la matière de base de construction ; et/ou si aucune matière de base de construction n'est mise en œuvre, de 10 % en poids à 90 % en poids, de préférence de 20 % en poids à 80 % en poids et de manière particulièrement préférée de 30 % en poids à 70 % en poids de novolaque, par rapport au mélange de matériaux de construction ;
• 10 à 500 % en poids, de préférence de 30 à 300 % en poids et de manière particulièrement préférée de 40 à 100 % en poids du composant isocyanate, par rapport à la novolaque ; et/ou si aucune matière de base de construction n'est mise en œuvre, de 10 % en poids à 90 % en poids, de préférence de 20 % en poids à 80 % en poids et de manière particulièrement préférée de 30 % en poids à 70 % en poids du composant isocyanate, par rapport au mélange de matériaux de construction ;
• 300 % en poids, de préférence 30 à 150 % en poids et de manière particulièrement préférée de 40 à 90 % en poids du premier solvant par rapport à la novolaque ; et
• 0 à 10% en poids, de préférence 0,05 à 8 % en poids et de manière particulièrement préférée de 0,15 à 3 % en poids de l'aminé tertiaire, par rapport à la novolaque.

17. Procédé selon au moins l'une des revendications précédentes, comprenant en outre les étapes suivantes :
i) durcissement du corps après avoir terminé la formation par couches dans un four ou à l'aide de micro-ondes et
ii) élimination consécutive du mélange de matériaux de construction non lié hors du moule de coulée au moins partiellement durci.

18. Procédé selon au moins l'une des revendications précédentes, dans lequel l'impression s'effectue avec une tête d'impression présentant une multitude de buses, les buses pouvant être de préférence pilotées sélectivement individuellement, la tête d'impression étant une tête d'impression « drop-on-demand » avec la technique bulles d'encre ou piézoélectrique.

19. Procédé selon la revendication 16, dans lequel la tête d'impression, pilotée par un ordinateur, peut être déplacée au moins dans un plan et les buses appliquent au moins par couches le premier solvant.

20. Moule ou noyau pouvant être fabriqué d'après le procédé selon au moins l'une des revendications précédentes pour la coulée de métal, en particulier la coulée du fer, de l'acier, du cuivre ou de l'aluminium.

21. Système de composants destiné à la fabrication d'un mélange de matériaux de construction comprenant séparément les uns des autres les composants suivants :
Composant (A) une novolaque sous la forme d'une matière solide particulaire écoulable,
Composant (B) un composant isocyanate comprenant un deuxième solvant et au moins un polyisocyanate ayant au moins deux groupes isocyanate dissous dans le deuxième solvant ;
Composant (C) un premier solvant dans lequel l'amine tertiaire est soluble et qui dissout au moins partiellement la novolaque pulvérulente,
dans lequel le premier solvant n'est pas pareil au deuxième solvant et les ingrédients énoncés des composants sont présents respectivement seulement dans l'un des composants.

22. Système de composants selon la revendication 21, comprenant comme autre composant, séparément des composants (A) à (C) :
Composant (D) une matière de base de moulage particulaire écoulable, en particulier une matière de base de moulage réfractaire particulaire écoulable.

23. Système de composants selon la revendication 21 ou 22, dans lequel le premier solvant est un solvant organique aprotique, comprenant 1 à 25 atomes de carbone, de préférence 1 à 15 atomes de carbone et de manière particulièrement préférée de 1 à 10 atomes de carbone ou des mélanges de ceux-ci et de préférence de l'oxygène lié sous la forme d'un ou de plusieurs groupes kéto, aldéhyde et/ou ester, et en particulier ester comme le diméthylglutarate, le diméthylsuccinate ou le diméthyladipate, ester d'acide carboxylique comme le propylène carbonate, l'éthylène carbonate ou le diméthylcarbonate, la gamma-butyrolactone, la triacétine, le tétraéthylsilicate ou des mélanges de ceux-ci.

24. Système de composants selon au moins l'une des revendications 21 à 23, **caractérisé par** l'une ou plusieurs des caractéristiques suivantes :
i) le premier solvant est un solvant polaire et présente un moment dipolaire supérieur à 0 debye, de manière particulièrement préférée supérieure à 0,7 debye et de manière tout particulièrement préférée supérieure à 1 debye ;
ii) le premier solvant présente une viscosité (Brookfield à 25°C) de 0 à 50 mPas, de préférence de 0,1 à 40 mPas, de manière particulièrement préférée de 0,2 à 30 mPas et de manière tout particulièrement préférée de 0,5 à 20 mPas ;
iii) le premier solvant présente à 20°C une tension superficielle de 5 à 90 mN/m, de préférence de 10 à 80 mN/m, de manière particulièrement préférée de 15 à 75 mN/m et de manière tout particulièrement préférée de 20 à 60 mN/m, la tension superficielle étant déterminée selon la méthode de la description.

25. Mélange de matériaux de construction écoulable, comprenant :
• une novolaque sous la forme d'une matière solide particulaire écoulable,
• un composant isocyanate, comprenant au moins un polyisocyanate ayant au moins deux groupes isocyanate et
• une matière de base de moulage particulaire, de préférence une matière de base de moulage réfractaire,
dans lequel la novolaque supportée, comme un sable Croning, et la matière de base de moulage particulaire peuvent former un composant.

26. Mélange de matériaux de construction selon la revendication 25, comprenant en outre un deuxième solvant, qui dissout le polyisocyanate et est différent du premier solvant.

27. Mélange de matériaux de construction selon la revendication 25 ou 26, dans lequel le deuxième solvant, la novolaque et le composant isocyanate sont en outre **caractérisés par** l'une des revendications 1 à 24.
